# EUROPEAN PATENT SPECIFICATION

(11) **EP 3 055 364 B1**
(45) Date of publication and mention of the grant of the patent: **20.12.2017**
(21) Application number: 14790770.3
(22) Date of filing: 10.10.2014
(51) Int. Cl.: C09D 5/00

(54) **ROAD MARKING COMPOSITIONS AND USE THEREOF**
STRASSENMARKIERUNGSZUSAMMENSETZUNGEN UND VERWENDUNG DAVON
COMPOSITIONS POUR SIGNALISATION HORIZONTALE ET UTILISATION DE CELLES-CI

(30) Priority: 11.10.2013 NL 2011586
(43) Date of publication of application: 17.08.2016
(73) Proprietor: Veluvine B.V., 4824 AG Breda (NL)
(72) Inventor: VAN DER TAK, Bastiaan, 4824 AG Breda (NL)
(74) Representative: V.O.
(86) International application number: PCT/NL2014/050706
(87) International publication number: WO 2015/053632

(56) References cited:
- WO-A1-2007/056820
- CN-A- 102 898 880
- US-A1- 2010 291 409

## Description

### BACKGROUND OF THE INVENTION

The invention is in the field of road markings. In particular the invention pertains to road marking compositions that can be used in marking roads for improved visibility, as well as to methods of marking roads using said road marking compositions.

EP-A-0 389 060, CN102898880, US2010/291409 and WO2007/056820 disclose paint compositions for marking roads.

The present invention seeks to improve the known paint compositions (also referred to as marking compositions) by making them more versatile, in particular by providing enhanced visibility during the day and at night and optionally making their visibility temperature dependent.

### BRIEF SUMMARY OF THE INVENTION

It is an object of the present invention to provide road marking compositions and methods of using them that result in patterns on the road having improved visibility, in particular by providing patterns that are luminescent (*viz*. fluorescent, phosphorescent or both).

A further object is to provide road marking compositions that are thermochrome, *viz*. change color upon temperature change.

The invention provides marking compositions that are luminescent and/or thermochrome, which marking compositions that can be applied easily to road surfaces using printing techniques. In this way the marking compositions of the invention can be used to print patterns in a predetermined shape. The marking compositions of the invention have a drying time and hardening time that enables their use on roads. In particular the drying time is very short, and may be on the order of minutes which has the advantage of causing minimal impact on road traffic.

### DETAILED DESCRIPTION OF THE INVENTION

In a first aspect, the present invention is directed to a marking composition suitable for marking roads for improved visibility, which composition comprises a monomer having a high-boiling point; a polyacrylate; and at least one compound selected from luminescent compound; thermochrome compound; or both; which marking composition has a viscosity of less than or equal to 1000 mPa ·s, as measured by a Brookfield viscometer using a spindle no. 2 at 100 rpm and at a temperature of 20 °C.

The invention is furthermore directed to a method of applying a pattern on a horizontal surface, in particular a road or part thereof, comprising printing a pattern with the marking composition according to the invention, followed by a step in which said printed pattern is contacted with a hardener.

The new compositions of the present invention open up completely new applications, such as warning symbols on the road surface, which for instance change color with temperature so that they may become visible when the road temperature decreases below a certain threshold value. In view of this new means of application have to be applied as well, which result in certain demands on the marking compositions in terms of processability and drying time. Thus a further object of the present invention is to provide such compositions which can be used in new printing techniques, which techniques facilitate printing images on roads in various shapes and sizes, not limited to continuous lines and dashed lines alone.

The monomer used in the marking composition of the invention has a high boiling point, which is typically > 100 °C, and preferably > 150 °C. The monomer is selected from the group consisting of benzyl methacrylate, 2-ethylhexyl acrylate, hydroxypropyl methacrylate, hydroxybutyl methacrylate, n-butyl acrylate, dibutyl maleate, butyl methacrylate and
combinations thereof. More preferably the monomer selected comprises benzyl methacrylate.

The luminescent compound may be selected from one or more sulfides; strontium salts; alkaline earth metal salts; and combinations thereof.

Preferably said luminescent compound is selected from SrAl₂O₄, calcium sulfide; alkaline earth metal silicate; and combinations thereof.

The thermochrome compound may be selected from one or more organic materials, such as thermochromic liquid crystals and thermochromic dyes; and/or transition metal compounds.

Thermochromic liquid crystals, which may include cholesteryl esters and/or cyanobiphenyls, exhibit different colors at different temperatures because of the selective reflection of specific wavelengths of light on their structures. As the temperature increases, it changes the structure of these materials from a liquid crystalline at a lower temperature through to a nematic liquid crystalline isotropic liquid state at a higher temperature. The thermochromic liquid crystals used are typically microencapsulated in a polymeric material. Within the active range the color may change from black to red through orange, yellow, green, blue, violet, and then black again. Such color changes typically occur within a temperature range of between -30 °C and 120 °C.

Thermochromic dyes are mixtures typically comprising one or more leuco dyes, a color developer and an organic solvent. Leuco dyes are dyes whose molecules can acquire two forms, one of which is colorless. These dyes undergo a change color at varying pH values. The thermochromic dyes, like the thermochromic crystals, are also usually microencapsulated in a polymeric material. The leuco dyes may be selected from one or more spirolactones, fluorans, spiropyrans, fulgides and combinations thereof. The color developers used are proton donors and are typically acids such as bisphenol A, parabens, 1,2,3-triazole derivates, and 4-hydroxycoumarin, which alter the pH of the mixture, while the solvent is used to determine the temperature at which the color change will occur. When the solvent is solid, the acid cannot dissolve and the leuco dye exists in its lactone leuco form. When the solvent melts, the acid dissolves lowering the pH of the mixture and protonating the dye which causes the lactone ring to open and its absorption spectrum to shift resulting in a color change. The colors of the leuco dyes may include, but are not limited to, red, rose red, magenta, vermillion, orange, yellow, green, yellow green, sky blue, dark blue, violet, and black. The temperature at which a leuco dye undergoes a color change is typically between -15 °C and 70 °C.

Suitable transition metal compounds include bis(diethylammonium) tetrachlorocuprate; bis(diethylammonium) tetrachloronickelate; vanadium dioxide, which may also be doped with tungsten to lower its transition temperature; and, combinations thereof.

Preferably the thermochrome compound selected undergoes a color change within the temperature range of between -10 and 50 °C, and more preferably between 0 and 40 °C.

The marking composition of the invention typically has a viscosity of less than or equal to 1000 mPa ·s, and preferably between 550 and 1000 mPa ·s, as measured by a Brookfield viscometer using a spindle no. 2 at 100 rpm, and at a temperature of 20 °C.

The polyacrylates which may be used in the marking composition include polyacrylates comprising alkyl acrylates, and/or alkyl methacrylates, wherein said alkyl group has 1 to 10 carbon atoms, preferably 1 to 4 carbon atoms and combinations thereof. Suitable polyacrylates may further comprise styrene. The polyacrylates may be chosen from one or more homopolymers, copolymers (e.g. block copolymers, random copolymers and graft copolymers), mixtures, composites, crosslinking and blends of the above-mentioned polyacrylates. Preferably, the polyacrylate used comprises methyl methacrylate, butyl methacrylate and/or styrene and more preferably, a copolymer of methyl methacrylate and butyl methacrylate.

The marking composition of the present invention may further comprise an aldehyde binder.

Suitable binders which may be used include urea-aldehyde binders and/or ketone aldehyde binders, and the like. Preferably the aldehyde binder used comprises an urea-aldehyde binder.

Typical urea-aldehyde binders which may be used comprise cyclic, straight and/or branched chain alkyl and/or alkylene aldehydes; and/or, aromatic aldehydes. Preferably, the aldehyde is selected from the group consisting of formaldehyde, benzaldehyde, propanol, hexanal, cyclohexane carboxaldehyde, acetaldehyde, butyraldehyde, valeraldehyde and combinations thereof. The urea present in the urea-aldehyde binders may include straight and/or branched chain urea derivatives, as well as cyclic urea derivatives.

Typically, the ketone-aldehyde binders used comprise aldehydes as mentioned hereinabove. The ketone present in the ketone-aldehyde binders may include cyclic, straight and/or branched chain alkyl and/or alkylene ketones.

The marking composition of the present invention may further comprise one or more additives. Suitable additives may include fillers, accelerators, inhibitors, pigments, stabilizers, waxes and combinations thereof.

Fillers which may be used are inorganic materials, preferably transparent inorganic materials, such as, silicates (*e.g.* glass in the form of grains, particles and/or beads, quartz, aluminium silicate and cristobalite), aluminium oxide (*e.g.* corundum), calcium magnesium carbonate (*e.g.* dolomite), barium sulfate, calcium carbonate, calcium sulfate, syenites and combinations thereof. The particle size of the fillers is typically from 1 µm to 1 mm.

Preferably the accelerators used are amine based accelerators. Such amine based accelerators may include N,N-dimethyl aniline, N,N-diethyl aniline, N,N-dimethyl-3,5-xylidine, para-(dimethylamino)-phenylacetic acid, dimethyl-para-toluidine, diethyl-para-toluidine, ethoxylated para-toluidines (*e.g*. N,N-bis-(2-hydroxyethyl)-para- toluidine and polyethoxypara-toluidine) and combinations thereof.

The inhibitors used may include hydroquinone and derivatives thereof, as well as butylhydroxytoluene, para-methoxyphenol, benzene-1,2-diol, 4-tert-butylbenzene-1,2-diol, phenothiazine and combinations thereof. Such inhibitors act to prevent thermal polymerization of the marking composition of the invention during storage.

The pigments which may be used include inorganic pigments, for example, titanium dioxide, carbon black, aluminum silicate and calcium carbonate; and/or, organic pigments. The choice of the specific pigment used will be dependent on the desired color for the painted road markings.

The stabilizers which may be used include ultraviolet (UV) stabilizers, anti-settling stabilizers, or both. The UV stabilizers may be selected from one or more benzophenones, benzotriazoles, salicylates, triazines, cyanoacrylates and combinations thereof. Such UV stabilizers act to minimize discoloration and prolong the useful life of the marking composition of the invention. Suitable anti-settling stabilizers may include surfactants, colloids and/or gelling agents.

Suitable waxes may include paraffin waxes and/or crystalline polyethylene waxes. Preferably the wax used has a melting point between 50 and 120 °C.

Typically the marking compositions of the invention comprise:
10 - 25 wt.% of a monomer having a high-boiling point;
5 - 20 wt.% of a polyacrylate and/or an aldehyde binder;
1-50 wt.% of at least one compound selected from luminescent compound; thermochrome compound; or combinations thereof; and,
20-57.5 wt.% of one or more additives.

It should be appreciated, however, that this typical marking composition is for illustrative purposes only, and is not intended to limit the scope of the invention.

The marking composition of the present invention may be applied to road surfaces and other horizontal surfaces (*e.g.* parking lots/garages, air strips, distribution halls, sports fields and courts with a sealed surface, walkways, bicycle paths and the like) using conventional means. However, with great advantages special printing techniques are used that are suitable for printing single images in a predetermined pattern.

EP-A-1 958 517, which is incorporated herein by reference, describes a method and device for printing, in particular for printing foodstuff. This method for dispensing a liquid through a plurality of dispensing openings comprises the steps of introducing a liquid for dispensing into a liquid container; applying a pressure to the liquid which is higher than ambient pressure; carrying the liquid to the dispensing openings; opening and closing the openings in a controlled manner per dispensing opening by means of displacing the membrane, and wherein said membrane is displaced by means of varying a medium pressure. Surprisingly it was found that this method is also suitable for dispensing a marking composition of the present invention.

The marking compositions of the present invention can be tailored such that they meet the conflicting demands that result from their application as road markings. On the one hand the compositions need to be fast curing, which calls for a viscous liquid. On the other hand they need to be printable, for instance using the apparatus of EP-A-1 958 517, which calls for a marking composition that has a very low viscosity prior to application. Surprisingly, by choosing a two-component system, for instance the marking compositions of EP-A-0 389 060, while carefully selecting a monomer having a proper boiling point, these conflicting demands were found to be made compatible.

In contrast to the monomers used in marking composition in EP-A-0 389 060, *viz*. acrylic acid or methyl methacrylate, which are characterized by a low boiling point, the monomer used in the present invention has a high boiling point. The advantage of the high boiling point is the elongation of the evaporation characteristics of the marking composition necessary to avoid blockages by drying in of the dispensing openings of the printer. Commonly, high boiling points and/or high molecular weights of the monomers are not preferred because of their lower reactivity, solubility and viscosity. However, the present inventors have surprisingly found that the marking composition according to the present invention overcomes these drawbacks.

In accordance with the invention the method of applying a pattern on a horizontal surface comprises printing a pattern with the marking composition according to the present invention, followed by a step in which said printed pattern is contacted with a hardener. This hardener initiates and propagates a polymerization reaction in which said monomer polymerizes, resulting in a cured composition, as is described in EP-A-0 389 060, which is incorporated herein by reference.

Preferably, the method of applying the marking composition of the present invention is according to that of EP-A-1 958 517, which method comprises the steps of introducing the marking composition for dispensing into a marking composition container; applying a pressure to the marking composition which is higher than ambient pressure; carrying the marking composition to the dispensing openings; opening and closing the openings in a controlled manner per dispensing opening by means of displacing the membrane, and wherein said membrane is displaced by means of varying a medium pressure.

During operation the membrane is displaced at a speed such that the marking composition leaves the dispensing opening at a determined starting speed. This starting speed usually lies between 1 and 10 m/s, and preferably between 2 and 5 m/s. The device of EP-A-1 958 517 hereby presses the marking composition in the direction of the horizontal surface to be provided with the marking composition. The starting speed at which the marking composition is pressed out of the device can be controlled by varying the pressure and the flow rate of the medium with which the membrane is displaced.

Typically the membrane displacement has a frequency between 1 and 500 Hz. In order to ensure a good sealing the medium pressure exerted on the membrane in a closed position of the dispensing opening should be at least 0.2 bar or higher than the pressure of the marking composition in the marking composition container which has to be dispensed.

Preferably said hardener comprises dibenzoyl peroxide.

In accordance with the teachings of EP-A-0 389 060, said hardener is preferably a granular material, which comprises a solid core material to which said hardener is bonded. The solid core material is bonded to the hardener with the aid of a softening agent.

The solid core material may include inorganic materials, such as silicates (*e.g.* glass in the form of grains, particles and/or beads, quartz, aluminium silicate and cristobalite), aluminium oxide (*e.g.* corundum), calcium magnesium carbonate (*e.g.* dolomite), granite, basalt and the like, and combinations thereof. The particle size of the solid core material is typically from 0.1 to 2.5 mm, and preferably from 0.1 to 1.4 mm.

The softening agent which may be used has a melting point lower than the decomposition temperature of dibenzoyl peroxide, and preferably comprises dicyclohexyl phthalate.

The hardener may further comprise one or more pigments. Such pigments correspond to those as previously described.

In another embodiment of the present invention, the method of applying a pattern on a horizontal surface according to the present invention may also be performed with marking composition lacking the compound selected from luminescent compound; thermochrome compound or combination thereof. In such an embodiment, the marking composition may for instance be according to EP-A-0 389 060. When a marking composition according to EP-A-0 389 060 is used, a monomer having a high boiling point according to the present invention is selected. In this particular embodiment, all components, physical properties or other features of the marking composition may thus be the combined with other embodiments of the present invention, except that the marking composition lacks the compound selected from luminescent compound; thermochrome compound or combination thereof. Hence, the method of applying a pattern on a horizontal surface, in particular a road or part thereof, comprising printing a pattern with the marking composition, followed by a step in which said printed pattern is contacted with a hardener; may make use of marking composition which comprises a monomer having a high-boiling point; a polyacrylate; which marking composition has a viscosity of less than or equal to 1000 mPa • s, as measured by a Brookfield viscometer using a spindle no. 2 at 100 rpm, and at a temperature of 20 °C. Typically, conventional organic or inorganic color pigments may be added to the marking composition wherein the compound selected from luminescent compound; thermochrome compound or combination thereof, may not be present.

For the purpose of clarity and a concise description features are described herein as part of the same or separate embodiments, however, it will be appreciated that the scope of the invention may include embodiments having combinations of all or some of the features described.

In a further aspect, the present invention is directed to marking composition suitable for marking roads for improved visibility, which composition comprises a hydroxyl functional acrylate; an isocyanate; and at least one compound selected from luminescent compound; thermochrome compound; or both.

The marking composition is prepared as a two component composition, wherein the first component comprises a hydroxyl functional acrylate; and at least one compound selected from luminescent compound; thermochrome compound; or both; and, a second component comprising an isocyanate.

The hydroxyl functional acrylate which may be used in the marking composition of the present invention includes hydroxyl alkyl acrylates and/or hydroxyl alkyl methacrylates, wherein said alkyl group has 1 to 10 carbon atoms, and preferably 1 to 4 carbon atoms. The advantage of using hydroxyl functional acrylates in the marking composition of the present invention is that they are readily cross-linked with isocyanates, in particular polyisocyanates, to produce hardened polymers.

Suitable isocyanates may include biuret polyisocyanate, aliphatic polyisocyanates based on hexamethylene diisocyanate, aliphatic polyisocyanates based on isophorone diisocyanate, aromatic polyisocyanates based on 2,4 and 2,6 toluene diisocyanate, aromatic polyisocyanates based on methylene diphenyl diisocynanate, blocked polyisocyanates and combinations thereof. Preferably, the isocyanate comprises biuret polyisocyanate.

Typically the isocyanate used is diluted in an ester based solvent. Suitable ester based solvents may include alkyl acetates, alkyl propionates, glycol ether acetates and combinations thereof.

The luminescent and/or thermochrome compounds which may be used in these marking compositions of the present invention are the same as described herein above.

The marking composition of the invention typically has a viscosity of less than or equal to 1000 mPa ·s, as measured by a Brookfield viscometer using a spindle no. 2 at 100 rpm, and at a temperature of 20 °C.

This marking composition of the present invention may further comprise one or more additives as described herein above. The one or more additives may be present in either of the two components or in both. Preferably, the one or more additives are present in the first component of the marking composition.

The marking composition of the present invention may also be applied to road surfaces and other horizontal surfaces (*e.g.* parking lots/garages, air strips, distribution halls, sports fields and courts with a sealed surface, walkways, bicycle paths and the like) using conventional means. Preferably, these marking composition of the present invention are applied to indoor road surfaces and other horizontal surfaces. Such conventional means which may be used for applying the marking composition include airless spray guns and the like.

Typically these marking compositions of the invention comprise:
a first component having 20-50 wt.% of a hydroxyl functional acrylate; and,
1-50 wt.% of at least one compound selected from luminescent compound; thermochrome compound; or combinations thereof; and,
20-57.5 wt.% of one or more additives; and,
a second component having 20-57.5 wt.% of an ester based solvent and 60 -80 wt.% of an isocyanate.

Such marking compositions are prepared by mixing the first component with the second component in an appropriate ratio (*e.g.* 80 vol.% : 20 vol.%, respectively).

It should be appreciated, however, that this typical marking composition is for illustrative purposes only, and is not intended to limit the scope of the invention.

The invention is now elucidated on the basis of some examples, which are also not intended to limit the scope of the invention.

### Examples

### Example 1

Marking compositions were prepared by combining the following components:
22 wt.% methyl methacrylate, 7 wt.% 2-ethylhexyl acrylate and 3 wt.% hydroxypropyl methacrylate;
9 wt.% acrylate copolymer and 9 wt.% urea-aldehyde binder;
1.2 wt.% polyethoxypara-toluidine;
< 0.1 wt.% butylhydroxytoluene;
0.8 wt.% of 60 wt.% wax in water emulsion;
0.3 wt.% pyrogene quartz and 0.1 wt.% solution of polyhydroxycarboxylic acid amides; and,
46 wt.% of yellow green luminescent pigments; or,
15 wt.% thermochrome pigments red/white 4 °C; or,
15 wt.% thermochrome pigments blue/white 4 °C; or,
15 wt.% thermochrome pigments red/white 10 °C; or,
15 wt.% thermochrome pigments black/yellow 29 °C.

The viscosity of this marking compositions was 1000 mPa ·s, as measured by a Brookfield viscometer using a spindle no. 2 at 100 rpm, and at a temperature of 20 °C.

The marking compositions were sprayed onto a glass surface, a metal surface and an asphalt surface using a Braive bird paint applicator 500 micron wet. The hardening times of the marking compositions was typically between 6 and 12 min at a temperature of 20 °C.

The printed marking compositions with the luminescent pigments were found to have long lasting light emissions after dark, which typically lasted more than 2 h after loading during the preceding daylight hours. The luminescence of the marking compositions was tested according to DIN67510 Part 1 (5 min at 1000 lux exposure) and had values of ≥ 36 millicandelas per square meter (mcd/m²) after 60 min.

The printed marking compositions with the thermochrome pigments had color changes which ranged from blue to white at 4 °C and red to white at 4 °C and 10 °C and black to yellow at 29 °C, respectively.

### Example 2

Marking compositions were prepared using the following components:
a first component having 32 wt.% or 45 wt.% of a hydroxyl functional acrylate;
0.4 wt.% pyrogene quartz and 0.2 wt.% solution of polyhydroxycarboxylic acid amides; and,
46 wt.% of yellow green luminescent pigments; and,
a second component having 20 vol.% biuret polyisocyanate based on hexamethylene diisocyanate in a solvent mixture of 13 vol.% n-butylacetate and 80 vol.% ethylacetate.

These marking compositions were prepared by mixing 1 liter of the second component with 4 liters of the first component.

The viscosity of these marking compositions was 1000 mPa ·s, as measured by a Brookfield viscometer using a spindle no. 2 at 100 rpm, and at a temperature of 20 °C.

The marking compositions were sprayed directly onto a number of surfaces which included a glass surface, a metal surface and an asphalt surface, using a Braive bird paint applicator 500 micron wet. The hardening time of the compositions was typically about 16 h at a temperature of 20 °C.

The printed marking compositions with the luminescent pigments were found to have long lasting light emissions after dark, which typically lasted more than 2 h after loading during the preceding daylight hours. The luminescence of the marking compositions was tested according to DIN67510 Part 1 (5 min at 1000 lux exposure) and had values of ≥ 36 mcd/m² after 60 min.

### Example 3

A marking composition was prepared using the following components:
16 wt.% benzyl methacrylate, 5 wt.% 2-ethylhexyl acrylate and 2 wt.% hydroxypropyl methacrylate;
7 wt.% acrylate copolymer and 7 wt.% urea-aldehyde binder;
9 wt.% titanium dioxide pigments;
20 wt.% dolomite and 30 wt.% cristobalite;
0.9 wt.% polyethoxypara-toluidine;
< 0.1 wt.% butylhydroxytoluene;
0.6 wt.% 60 wt.% wax in water emulsion; and,
0.3 wt.% pyrogene quartz and 0.1 wt.% solution of polyhydroxycarboxylic acid amides.

The viscosity of the marking composition was 1000 mPa ·s, as measured by a Brookfield viscometer using a spindle no. 2 at 100 rpm, and at a temperature of 20 °C.

The marking composition was applied onto the surface of an asphalt based roofing material using the printing device and method of EP-A-1 958 517 "Food-jet printer". The printed composition was then contacted within a few seconds after printing with 1.0-1.5 times overdoses in a dosage of 1.5 kg/m² Veluvine Plusbeads 600-1500 (glass beads bonded to dibenzoly peroxide using dicyclohexyl phthalate; commercial product from Veluvine B.V., the Netherlands) as a special drop-on hardener.

The hardening time of the composition was typically about 10 min at a temperature of 20 °C.

The printed marking composition was found to have good readability.

### Example 4

A marking composition was prepared using the same components as Example 3, with the exception that the acrylate monomers used were 26 wt.% benzyl methacrylate, 3 wt.% 2-ethylhexyl acrylate and 2 wt.% hydroxypropyl methacrylate.

The viscosity of this marking composition was 1000 mPa ·s, as measured by a Brookfield viscometer using a spindle no. 2 at 100 rpm, and at a temperature of 20 °C.

This marking composition was tested by applying it to an asphalt based surface using an airless spray gun in a so called 98:2 system, meaning that 98 wt.% of the marking composition and 2 wt.% of a sprayable dispersion of dibenzoyl peroxide was used. An internal static mixer system was used to incorporate the peroxide hardener into the marking composition which started the hardening process. The hardening time of this composition was typically about 9 min at a temperature of 20 °C.

## Claims

1. Marking composition suitable for marking roads for improved visibility, which composition comprises a monomer having a high-boiling point and which is selected from the group consisting of benzyl methacrylate, 2-ethylhexyl acrylate, hydroxypropyl methacrylate, hydroxybutyl methacrylate, n-butyl acrylate, dibutyl maleate, butyl methacrylate, and combinations thereof, and preferably benzyl methacrylate; a polyacrylate; and at least one compound selected from luminescent compound; thermochrome compound; or combinations thereof; which marking composition has a viscosity of less than or equal to 1000 mPa ·s, as measured by a Brookfield viscometer using a spindle no. 2 at 100 rpm, and at a temperature of 20 °C.

2. Marking composition suitable for marking roads for improved visibility, which composition comprises a hydroxyl functional acrylate; an isocyanate; and at least one compound selected from luminescent compound; thermochrome compound; or both.

3. Marking composition according to claim 1, which composition further comprises an aldehyde binder.

4. Marking composition according to any of the previous claims, which comprises a luminescent compound selected from one or more sulfides; strontium salts; alkaline earth metal salts; and combinations thereof.

5. Marking composition according to the previous claim, wherein said luminescent compound is selected from SrAl₂O₄, calcium sulfide; alkaline earth metal silicate; and combinations thereof.

6. Marking composition according to any of the previous claims, wherein the thermochrome compound is selected from one or more organic materials, wherein preferably said one or more organic materials are thermochromic liquid crystals and/or thermochromic dyes; transition metal compounds; and combinations thereof.

7. Marking composition according to any of the previous claims, which composition further comprises one or more additives, wherein said one or more additives are selected from the group consisting of fillers, accelerators, inhibitors, pigments, stabilizers, waxes and combinations thereof.

8. Marking composition according to the previous claim, wherein said fillers are inorganic materials, preferably transparent inorganic materials; wherein said accelerators are selected from the group consisting of N,N-dimethyl aniline, N,N-diethyl aniline, N,N-dimethyl-3,5-xylidine, para-(dimethylamino)-phenylacetic acid, dimethyl-para-toluidine, diethyl-para-toluidine, an ethoxylated para-toluidine and combinations thereof; and, wherein said inhibitors are selected from the group consisting of hydroquinone and derivatives thereof, butylhydroxytoluene, para-methoxyphenol, benzene-1,2-diol, 4-tert-butylbenzene-1,2-diol, phenothiazine and combinations thereof.

9. Method of applying a pattern on a horizontal surface, in particular a road or part thereof, comprising printing a pattern with the marking composition according to any of the claims 1, 3-8, followed by a step in which said printed pattern is contacted with a hardener.

10. Method according to claim 9, wherein said method comprises the steps of introducing the marking composition for dispensing into a marking composition container; applying a pressure to the marking composition which is higher than ambient pressure; carrying the marking composition to the dispensing openings; opening and closing the openings in a controlled manner per dispensing opening by means of displacing the membrane, and wherein said membrane is displaced by means of varying a medium pressure.

11. Method according to claims 9 or 10, wherein said hardener comprises dibenzoyl peroxide.

12. Method according to any of the claims 9-11, wherein said hardener is a granular material, which comprises a solid core material to which said hardener is bonded.

13. Method according to any of the claims 9-12, wherein said hardener is bonded to said solid core material with the aid of a softening agent, and wherein preferably said softening agent comprises dicyclohexyl phthalate.

14. Use of a marking composition according to claims 1-8 in a printed pattern of a predetermined shape on a horizontal surface, wherein said horizontal surface includes road surfaces or parts thereof, parking lots/garages, air strips, distribution halls, sports fields and courts with a sealed surface, walkways, bicycle paths and the like.

## Patentansprüche

1. Markierungszusammensetzung, geeignet zum Markieren von Straßen für verbesserte Sichtbarkeit, welche Zusammensetzung ein Monomer mit einem hohen Siedepunkt umfasst und das ausgewählt ist aus der Gruppe, bestehend aus Benzylmethacrylat, 2-Ethylhexylacrylat, Hydroxypropylmethacrylat, Hydroxybutylmethacrylat, n-Butylacrylat, Dibutylmaleat, Butylmethacrylat und Kombinationen davon und bevorzugt Benzylmethacrylat; ein Polyacrylat; und mindestens eine Verbindung ausgewählt aus einer lumineszierenden Verbindung; Thermochromverbindung; oder Kombinationen davon; welche Markierungszusammensetzung eine Viskosität von weniger als oder gleich 1000 mPa s hat, wie mit einem Brookfield-Viskometer unter Verwendung einer Spindel Nr. 2 bei 100 U/Min. und bei einer Temperatur von 20 °C gemessen.

2. Markierungszusammensetzung, geeignet zum Markieren von Straßen für verbesserte Sichtbarkeit, welche Zusammensetzung ein hydroxyfunktionelles Acrylat; ein Isocyanat; und mindestens eine Verbindung, ausgewählt aus Lumineszenzverbindung; Thermochromverbindung; oder beide umfasst.

3. Markierungszusammensetzung nach Anspruch 1, welche Zusammensetzung ferner ein Aldehydbindemittel umfasst.

4. Markierungszusammensetzung nach einem der vorhergehenden Ansprüche, die eine Lumineszenzverbindung umfasst, ausgewählt aus einem oder mehreren Sulfiden; Strontiumsalzen; Erdalkalimetallsalzen; und Kombinationen davon.

5. Markierungszusammensetzung nach dem vorhergehenden Anspruch, wobei die Lumineszenzverbindung ausgewählt ist aus SrAl₂O₄, Kalziumsulfid; Erdalkalimetallsilikat; und Kombinationen davon.

6. Markierungszusammensetzung nach einem der vorhergehenden Ansprüche, wobei die Thermochromverbindung ausgewählt ist aus einem oder mehreren organischen Materialien, wobei bevorzugt das eine oder die mehreren organischen Materialien thermochrome Flüssigkristalle und/oder thermochrome Farbstoffe; Übergangsmetallverbindungen; und Kombinationen davon sind.

7. Markierungszusammensetzung nach einem der vorhergehenden Ansprüche, welche Zusammensetzung ferner ein oder mehrere Additive umfasst, wobei das eine oder die mehreren Additive ausgewählt sind aus der Gruppe, bestehend aus Füllstoffen, Beschleunigern, Hemmern, Pigmenten, Stabilisatoren, Wachsen und Kombinationen davon.

8. Markierungszusammensetzung nach dem vorhergehenden Anspruch, wobei die Füllmittel anorganische Materialien sind, bevorzugt transparente anorganische Materialien; wobei die Beschleuniger ausgewählt sind aus der Gruppe, bestehend aus N,N-Dimethylanilin, N,N-Diethylanilin, N,N-Dimethyl-3,5-xylidin, Para-(dimethylamino-)phenylessigsäure, Dimethyl-para-toluidin, Diethyl-para-toluidin, einem ethoxylierten Para-toluidin und Kombinationen davon; und wobei die Hemmer ausgewählt sind aus der Gruppe, bestehend aus Hydrochinon und Derivaten davon, Butylhydroxytoluen, Para-methoxyphenol, Benzen-1,2-diol, 4-Tert-butylbenzen-1,2-diol, Phenothiazin und Kombinationen davon.

9. Verfahren zum Anwenden eines Musters auf einer horizontalen Oberfläche, insbesondere einer Straße oder eines Teils davon, umfassend Drucken eines Musters mit der Markierungszusammensetzung nach einem der Ansprüche 1, 3-8, gefolgt von einem Schritt, in dem das gedruckte Muster mit einem Härtungsmittel kontaktiert wird.

10. Verfahren nach Anspruch 9, wobei das Verfahren die Schritte umfasst, von Einbringen der Markierungszusammensetzung zum Ausgeben in einen Markierungszusammensetzungsbehälter; Anwenden von Druck auf die Markierungszusammensetzung, der höher als Umgebungsdruck ist; Befördern der Markierungszusammensetzung zu den Ausgabeöffnungen; Öffnen und Schließen der Öffnungen auf kontrollierte Weise pro Ausgabeöffnung mittels Verschieben der Membran, und wobei die Membran mittels Variieren eines Mediumdrucks verschoben wird.

11. Verfahren nach den Ansprüchen 9 oder 10, wobei das Härtungsmittel Dibenzoylperoxid umfasst.

12. Verfahren nach einem der Ansprüche 9-11, wobei das Härtungsmittel ein granuläres Material ist, welches ein festes Kernmaterial umfasst, an das das Härtungsmittel gebunden wird.

13. Verfahren nach einem der Ansprüche 9-12, wobei das Härtungsmittel an das feste Kernmaterial mithilfe eines Weichmachers gebunden wird und wobei bevorzugt der Weichmacher Dicyclohexylphthalat umfasst.

14. Verwendung einer Markierungszusammensetzung nach den Ansprüchen 1-8 in einem gedruckten Muster von einer vorbestimmten Form auf einer horizontalen Oberfläche, wobei die horizontale Oberfläche Straßenoberflächen oder teile davon, Parkplätze/Parkhäuser, Flugfelder, Distributionshallen, Sportfelder und -plätze mit einer versiegelten Oberfläche, Gehwege, Fahrradwege und dergleichen umfasst.

## Revendications

1. Composition de marquage appropriée pour le marquage de routes pour une visibilité améliorée, laquelle composition comprend un monomère ayant un point d'ébullition élevé et qui est choisi dans le groupe constitué par le méthacrylate de benzyle, l'acrylate de 2-éthylhexyle, le méthacrylate d'hydroxypropyle, le méthacrylate d'hydroxybutyle, l'acrylate de n-butyle, le maléate de dibutyle, le méthacrylate de butyle et des combinaisons de ceux-ci, et de préférence le méthacrylate de benzyle ; un polyacrylate ; et au moins un composé choisi parmi un composé luminescent ; un composé thermochrome ; ou des combinaisons ceux-ci ; laquelle composition de marquage a une viscosité inférieure ou égale à 1000 mPa.s, comme mesurée par un viscosimètre Brookfield utilisant un mobile n° 2 à 100 tr/min et à une température de 20 °C.

2. Composition de marquage appropriée pour le marquage des routes pour une visibilité améliorée, laquelle composition comprend un acrylate à fonctionnalité hydroxyle ; un isocyanate ; et au moins un composé choisi parmi un composé luminescent ; un composé thermochrome ; ou les deux.

3. Composition de marquage selon la revendication 1, laquelle composition comprend en outre un liant aldéhydique.

4. Composition de marquage selon l'une quelconque des revendications précédentes, qui comprend un composé luminescent choisi parmi un ou plusieurs sulfures ; sels de strontium ; sels de métaux alcalino-terreux ; et des combinaisons de ceux-ci.

5. Composition de marquage selon la revendication précédente, dans laquelle ledit composé luminescent est choisi parmi SrAl₂O₄, le sulfure de calcium ; un silicate de métaux alcalino-terreux ; et des combinaisons de ceux-ci.

6. Composition de marquage selon l'une quelconque des revendications précédentes, dans laquelle le composé thermochrome est choisi parmi une ou plusieurs substances organiques, de préférence ladite ou lesdites substances organiques étant des cristaux liquides thermochromiques et/ou des colorants thermochromiques ; des composés de métaux de transition ; et des combinaisons de ceux-ci.

7. Composition de marquage selon l'une quelconque des revendications précédentes, laquelle composition comprend en outre un ou plusieurs additifs, ledit ou lesdits additifs étant choisis dans le groupe constitué par les charges, les accélérateurs, les inhibiteurs, les pigments, les stabilisateurs, les cires et des combinaisons de ceux-ci.

8. Composition de marquage selon la revendication précédente, dans laquelle lesdites charges sont des substances inorganiques, de préférence des substances inorganiques transparentes ; dans laquelle lesdits accélérateurs sont choisis dans le groupe constitué par la N,N-diméthylaniline, la N,N-diéthylaniline, la N,N-diméthyl-3,5-xylidine, l'acide para-(diméthylamino)phénylacétique, la diméthyl-para-toluidine, la diéthyl-para-toluidine, une para-toluidine éthoxylée et des combinaisons de celles-ci ; et dans laquelle lesdits inhibiteurs sont choisis dans le groupe constitué par l'hydroquinone et des dérivés de celle-ci, le butylhydroxytoluène, le paraméthoxyphénol, le benzène-1,2-diol, le 4-tert-butylbenzène-1,2-diol, la phénothiazine et des combinaisons de ceux-ci.

9. Procédé d'application d'un motif sur une surface horizontale, en particulier une route ou une partie de celle-ci, comprenant l'impression d'un motif avec la composition de marquage selon l'une quelconque des revendications 1, 3 à 8, suivie par une étape dans laquelle ledit motif imprimé est mis en contact avec un agent de durcissement.

10. Procédé selon la revendication 9, dans lequel ledit procédé comprend les étapes d'introduction de la composition de marquage pour sa distribution dans un contenant de composition de marquage ; l'application d'une pression sur la composition de marquage qui est supérieure à la pression ambiante ; le transport de la composition de marquage vers les ouvertures de distribution ; l'ouverture et la fermeture des ouvertures d'une manière contrôlée pour la distribution qui s'ouvrent au moyen d'un déplacement de la membrane, et dans lequel ladite membrane est déplacée par le biais d'une variation de la pression moyenne.

11. Procédé selon la revendication 9 ou 10, dans lequel ledit agent de durcissement comprend du peroxyde de dibenzoyle.

12. Procédé selon l'une quelconque des revendications 9 à 11, dans lequel ledit agent de durcissement est un matériau granulaire qui comprend un matériau de coeur solide auquel ledit agent de durcissement est lié.

13. Procédé selon l'une quelconque des revendications 9 à 12, dans lequel ledit agent de durcissement est lié audit matériau de coeur solide avec l'aide d'un agent adoucissant, et dans lequel de préférence ledit agent adoucissant comprend le phtalate de dicyclohexyle.

14. Utilisation d'une composition de marquage selon l'une quelconque des revendications 1 à 8 dans un motif imprimé d'une forme prédéfinie sur une surface horizontale, ladite surface horizontale comprenant les surfaces des routes ou des parties de celles-ci, les parkings/garages, les pistes d'atterrissage, les halls de distribution, les terrains de sport et les courts avec une surface de scellement, les passerelles, les pistes cyclables et analogues.
